# EUROPÄISCHE PATENTANMELDUNG

(11) **EP 1 884 353 A1**
(43) Veröffentlichungstag der Anmeldung: **06.02.2008**
(21) Anmeldenummer: 06405319.2
(22) Anmeldetag: 24.07.2006
(51) Int. Cl.: B32B 15/08, H01M 2/02

(54) **Kunststoffverbundfolie**

(71) Anmelder: Alcan Technology & Management Ltd., 8212 Neuhausen am Rheinfall (CH)
(72) Erfinder: Brandl, Oliver, 78462 Konstanz (DE); Pasbrig, Erwin, 78224 Singen (DE); Nägeli, Hans-Rudolf, 8212 Neuhausen (CH); Lohwasser, Wolfgang, 78262 Gailingen (DE); Hentschel, Thomas, 53121 Bonn (DE)

(57) **Zusammenfassung**

Kunststoffverbundfolie für die Ummantelung von Lithium-lonen-Polymer-Batterien und Lithium-Polymer-Batterien, enthaltend, übereinander liegend angeordnet, die Schichten
a) eine Basisfolie aus Kunststoff
b) eine Metallfolie und
c) eine funktionelle Kunststoffschicht

wobei auf der Schicht b), der Metallfolie, zumindest gegen die Schicht c) gerichtet, und/oder auf der Schicht c), der funktionellen Kunststoffschicht, gegen die Schicht b), die Metallfolie, gerichtet, und/oder in der funktionellen Kunststoffschicht, wenigstens eine durch ein physikalisches Abscheidungsverfahren, wie Vakuum-Bedampfungsverfahren oder Sputtern, aufgebrachte Metallschutzschicht, beispielsweise eine Chromschicht, in einer Dicke von 0,1 bis 1000 nm (Nanometer) angeordnet ist.

## Beschreibung

Vorliegende Erfindung betrifft Kunststoffverbundfolien enthaltend, übereinander liegend angeordnet, die Schichten:
a) eine Basisfolie aus Kunststoff
b) eine Metallfolie und
c) eine funktionelle Kunststoffschicht.
Die Erfindung betrifft auch die Herstellung der Kunststoffverbundfolien und die Verwendung als Ummantelung von Batteriemodulen.

Batteriemodule, d.h. der elektrische Energie erzeugende Teil von Batterien und Akkumulatoren (Primär- und Sekundärelemente) weisen in der Regel ein Gehäuse oder eine Ummantelung auf. Beispielsweise Batteriemodule von Lithium-lonen-Polymer-Batterien oder Lithium-Polymer-Batterien, sind im wesentlichen aus einem positiven und einem negativen Anschluss und einer dazwischen liegenden elektrolytischen Gelschicht aufgebaut. Zum bestimmungsgemässen Gebrauch werden die Batteriemodule ummantelt. Die Ummantelung kann eine Tasche oder eine vorgeformte Packung aus einem mehrschichtigem Laminat aus Kunststoffen sein. Da der Elektrolyt in Gelform aggressive Salze und Lösemittel enthält und mit Restfeuchtigkeit reaktive Gase bilden kann, besteht die Gefahr, dass die aggressiven Substanzen die Ummantelung und in der Folge das Gerät, in dem die Batterie eingebaut ist, beschädigen oder zerstören. Zur Erhöhung der Haltbarkeit einer Batterie kann das Laminat eine Barriereschicht, aus z.B. Aluminiumfolie, enthalten. Die aggressiven Substanzen vermögen die Aluminiumfolie durch Korrosion oder Lochfrass zu schwächen oder zu zerstören oder die einzelnen Schichten die das Laminat der Ummantelung bilden, können sich gegenseitig voneinander lösen, d.h. delaminieren. Sinngemäss gilt der beschriebene chemische Angriff auf die Ummantelung auch für auf anderen chemischen Reaktionen beruhenden Primär- und Sekundärelemente.

Aus der US 6,761,994 ist bekannt, die Batteriemodule von Lithium-lon-Polymer Batterien oder Lithium-Polymer-Batterien mit Kunststoffverbundfolien zu umhüllen. Die Kunststoffverbundfolien können aus einer Basisschicht aus Kunststoff, Klebstoff, einer Aluminiumfolie und einer Siegelschicht aufgebaut sein. Um die Widerstandsfähigkeit der Aluminiumfolie gegen Korrosion zu verbessern, wird auf der Oberfläche der Aluminiumfolie chemisch eine Konversionsschicht durch eine Phosphat-Chromat Behandlung erzeugt.

Aus der EP 1 160 892 ist eine Batteriemodulverpackung bekannt, enthaltend eine Basisschicht, eine Aluminiumschicht, eine chemisch, mittels eines Phenolharzes, dreiwertigem Chromphosphat und Phosphorsäure, erzeugte Konversionsschicht und eine innerste Schicht aus Polypropylenharz.

Die japanische Patentanmeldung 2002-075298 nennt ein Verpackungsmaterial für Polymerbatterien, enthaltend u.a. eine Aluminiumfolie, die nasschemisch unter Verwendung von Chromsalzen, anorganischen Säuren, wie Phosphorsäure oder Fluorwasserstoff, und organischen Komponenten mit einer Chromschicht ausgerüstet wird.

Die Erzeugung der Konversionsschichten auf nasschemischem Wege bedarf ätzender und hochtoxischer Substanzen die fallweise auch noch in Lösemitteln aufgenommen sind. Die Erzeugung von nasschemisch abgeschiedenen Chromschichten, besonders bei den verwendeten dünnen Aluminiumfolien, ist nicht nur äusserst aufwendig, sondern es fallen zum Schluss toxische Stoffmischungen an, die aufwendig entsorgt werden müssen.

Aufgabe vorliegender Erfindung ist es, die genannten Nachteile zu vermeiden und eine zur Ummantelung von Batteriemodulen besonders geeignete Kunststoffverbundfolie, ein Verfahren zu deren Herstellung und die Verwendung der Kunststoffverbundfolie vorzuschlagen.

Erfindungsgemäss wird dies dadurch erreicht, dass auf der Schicht b), der Metallfolie, zumindest gegen die Schicht c) gerichtet, und/oder auf der Schicht c), der funktionellen Kunststoffschicht, gegen die Schicht b), die Metallfolie gerichtet, und/oder in der funktionellen Kunststoffschicht, wenigstens eine durch ein physikalisches Abscheidungsverfahren aufgebrachte Metallschutzschicht in einer Dicke von 0,1 bis 1000 nm (Nanometer) angeordnet ist.

Als Metallfolien können Eisen- und Nichteisenmetallfolien, wie Folien aus Eisen, Stahl, Nickel, Kupfer usw. angewendet werden. Die Metallfolien weisen eine Dicke von 12 bis 200 µm, zweckmässig 20 bis 200 µm, bevorzugt 25 bis 75 µm und insbesondere 40 bis 50 µm auf. Bevorzugt sind Folien aus Aluminium und dessen Legierungen, wobei weiches Aluminium zu bevorzugen ist. Beispiele von Folien aus Aluminium oder Aluminiumlegierungen sind solche aus Al 99,0, Al 99-5 oder Legierungen der Typen AA 1xxx und AA 8xxx, wobei die Werkstoffe AA 8006, AA 8014 und AA 8021 besonders geeignet sind. Die Folien aus Aluminium oder Aluminiumlegierungen können die vorstehend angegebenen Dicken aufweisen. Typische Dicken von Aluminiumfolien sind 40, 45, 50, 60 und 100 µm.

Die Basisfolie aus Kunststoff kann eine oder mehrere Schichten enthalten. Beispielsweise kann es sich um eine Polyesterfolie, z.B. eine Polyethylenterephtalatfolie (PET), eine Polyamidfolie, z.B. eine orientierte Polyamidfolie (oPA), eine Polyolefinfolie, z.B. eine orientierte Polypropylenfolie (oPP) oder eine Folie oder Schicht enthaltend ein säuredenaturiertes Polyolefin sein. Enthält die Basisfolie mehrere Schichten, so kann es sich um zwei oder mehrere jeweils gegenseitig klebstoffkaschierte, extrusionskaschierte und/oder heisskalandrierte Schichten, resp. Folien handeln, Klebstoffkaschierte Schichten oder Folien können mit wässrigen, lösemittelhaltigen und/oder lösemittelfreien Klebstoffen verarbeitet werden. Die Dicke der Basisfolie kann von 12 bis 50 µm, zweckmässig von 15 bis 25 µm, betragen. Typische Dicken solcher Folien sind 12, 15, 20, 23 und 25 µm. Bei der Verwendung der erfindungsgemässen Kunststoffverbundfolien als Ummantelung von Batteriemodulen stellt die Basisfolie die Aussenseite der Ummantelung dar, d.h. ist nach aussen gerichtet.

Die Basisfolie liegt der Metallfolie an. Zur Erzielung der geforderten Haftung der Basisfolie an der Metallfolie, kann zwischen der Basisfolie und der Metallfolie eine Klebstoffschicht angeordnet sein. Die Klebstoffe können lösemittelfrei, lösemittelbasierend oder auf wässriger Grundlage sein. In anderer Ausführungsform, um eine ausreichende Haftwirkung zwischen den zu verbindenden Schichten oder Folien zu erreichen, kann die Basisfolie säuredenaturierte Polyolefine enthalten oder zwischen der Basisfolie und der Metallfolie kann eine Schicht eines säuredenaturierten Polyolefins angeordnet sein. Die Basisfolie kann auch durch Curtain Coating, Extrusionskaschierung, und/oder durch Heisskalandrierung mit der Metallfolie verbunden werden. Fallweise kann bei den genannten Verfahren ein Primer eingesetzt werden. Zur Verbesserung der Haftung kann eine Plasma- oder Coronavorbehandlung oder eine chemische Vorbehandlung einer oder beider der jeweiligen gegenseitig zu verbindenden Oberflächen vorgesehen sein.

Die funktionelle Kunststoffschicht kann aus eine Schicht oder mehreren Schichten aufgebaut sein. Ist die funktionelle Kunststoffschicht aus mehreren Schichten aufgebaut, so kann es sich um zwei oder mehrere jeweils gegenseitig klebstoffkaschierte, extrusionskaschierte, heisskalandrierte und/oder durch Curtain Coating erhaltene Schichten, resp. Folien handeln. Bevorzugt sind zwei oder mehrere coextrudierte Schichten. Die funktionelle Schicht enthält beispielsweise Polyamide, wie orientiertes Polyamid (oPA), Polyolefine, wie Polypropylen, orientiertes Polypropylen (oPP) oder Polyethylen, Polyester, wie Polyethylenterephtalat (PET), säuredenaturierte Polyolefine, wie säuredenaturiertes Polypropylen -ethylen, metallocenhaltige Polyolefine, wie metallocenhaltiges Polypropylen oder -ethylen, methacrylsäurehaltige Polyolefine, wie methacrylsäurehaltiges Polypropylen oder - ethylen. Bei den Polypropylenen kann es sich auch um einen Blend von Polypropylen mit Polyethylen oder anderen Polyolefinen handeln. Auch angewendet werden können Copolymere aus Propylen und Ethylen oder anderen Olefinen oder cycloolefinische Copolymere (CoC), cycloolefinische Polymere (COP) oder Polymere und Copolymere des Acrylnitrils, wie Acrylnitril/Methylacrylat-Copolymere (BAREX®). Bevorzugt ist eine funktionelle Schicht, die eine Coextrusionsschicht aus wenigstens zwei Schichten, nämlich einer Polypropylenschicht und/oder einer metallocenhaltigen Polypropylenschicht, und eine methacrylsäurehaltige Polypropylenschicht enthält. Die Gesamtdicke der funktionellen Schicht kann beispielsweise von 12 bis 100 µm betragen, wobei einzelne Schichten von 15 bis 60 µm und zwei oder mehrere Schichten zusammen 40 bis 100 µm Dicke aufweisen können.

Bei der Verwendung der erfindungsgemässen Kunststoffverbundfolien als Ummantelung von Batteriemodulen stellt die funktionelle Kunststoffschicht die Innenseite der Ummantelung dar, d.h. sie ist nach innen, zum Batteriemodul hin gerichtet.

Typische Beispiele von funktionellen Schichten ist eine Schicht aus coextrudiertem Polypropylen in einer Dicke von 30 bis 50 µm oder eine Schicht aus coextrudiertem Polyethylen in einer Dicke von 30 µm.

Ist die funktionelle Kunststoffschicht beispielsweise aus zwei Schichten aufgebaut, so ist eine Schicht gegen die Metallfolie gerichtet, während die andere Schicht entsprechend gegen die Innenseite oder das Batteriemodul gerichtet ist.

Typische Beispiele von derartigen Schichten sind - zur Metallfolie gewandt - aus einer Schicht aus 15 µm orientiertem Polyamid und - zur Innenseite gewandt - 30 bis 50 µm coextrudiertes Polypropylen oder - zur Metallfolie gewandt - aus einer Schicht aus 12 µm Polyethylenterephtalat und - zur Innenseite gewandt - 50 µm coextrudiertem Polypropylen oder- zur Metallfolie gewandt - aus einer Schicht aus 15 µm orientiertem Polyamid und -zur Innenseite gewandt - 30 µm coextrudiertem Polyethylen oder - zur Metallfolie gewandt - aus einer Schicht aus 20 µm orientiertem Polypropylen und - zur Innenseite gewandt - 30 bis 50 µm coextrudiertem Polypropylen.

Sinngemäss können auch funktionelle Schichten mit drei oder mehr Einzelschichten angewendet werden.

Die funktionelle Schicht weist vorteilhaft Siegeleigenschaften auf, d.h. die funktionelle Schicht ist siegelbar, wie kalt- oder heisssiegelbar. Die funktionelle Schicht ist zweckmässig gegen Flächen anderer Verpackungsteile und gegen sich selbst siegelbar. Ist die funktionelle Schicht eine Kombination aus mehreren Einzelschichten, so weist insbesondere die äusserste freiliegende Schicht Siegeleigenschaften auf oder ist siegelbar, resp. die äusserste freiliegende Schicht ist vorteilhaft schweissbar oder kann mittels eines Klebstoffes geklebt werden.

Die Basisfolie liegt auf der einen Seite der Metallfolie an. Der anderen Seite der Metallfolie liegt die funktionelle Schicht an. Zur Erzielung der geforderten Haftung zwischen funktioneller Schicht und Metallfolie, kann dazwischen eine Klebstoffschicht angeordnet sein. Die Klebstoffe können lösemittelfrei, lösemittelbasierend oder auf wässriger Grundlage sein. In anderer Ausführungsform, um eine ausreichende Haftwirkung zwischen den zu verbindenden Schichten oder Folien zu erreichen, kann die funktionelle Schicht säuredenaturierte Polyolefine enthalten oder zwischen der funktionellen Schicht und der Metallfolie kann eine Schicht eines säuredenaturierten Polyolefins angeordnet sein. Die funktionelle Schicht kann auch durch Extrusionskaschierung, Extrusionsbeschichtung und/oder durch Heisskalandrierung mit der Metallfolie verbunden werden. Fallweise kann bei den genannten Verfahren ein Primer eingesetzt werden. Zur Verbesserung der Haftung kann eine Plasma- oder Coronavorbehandlung einer oder beider der jeweiligen gegenseitig zu verbindenden Oberflächen vorgesehen sein.

Die erfindungsgemässe Kunststoffverbundfolie enthält eine Metallschutzschicht. Es ist die Aufgabe der Metallschutzschicht die Metallfolie vor aggressiven Stoffen zu schützen. In einer Ausführungsform gemäss vorliegender Erfindung befindet sich auf der Metallfolie, wie auf einer Folie aus Aluminium oder aus einer Aluminiumlegierung, eine 0,1 bis 1000 nm (Nanometer) dicke Metallschutzschicht. In altemativer Ausführungsform liegt die Metallschutzschicht nicht der Metallfolie an, sondern liegt der funktionellen Schicht an. Beim Verbinden der Metallfolie und der funktionellen Schicht kommt die Metalischutzschicht - fallweise über einen Klebstoff oder Haftvermittler - auf die eine Metallfolienoberfläche zu liegen. Die Metallschutzschicht kann auch auf einer Schicht oder Folie eines der genannten Kunststoffe, die mit anderen Schichten oder Folien aus den genannten Kunststoffen zu einer mehrlagigen oder mehrschichtigen funktionellen Schicht verarbeitet werden, abgeschieden werden. Die Metallschutzschicht ist dann zwischen zwei Kunststoffschichten der funktionellen Schicht enthalten.

Mehrere Metallschutzschichten können vorgesehen sein. Eine erste Metallschutzschicht kann auf der Metallfolie angeordnet sein und eine zweite Metallschutzschicht kann auf der funktionellen Schicht angeordnet sein, wobei in der erfindungsgemässen Kunststoffverbundfolie die Metallschutzschichten einander - fallweise über einen Klebstoff oder Haftvermittler- anliegen.

In weiterer Ausführungsform ist eine Metallschutzschicht auf der Metallfolie angeordnet und eine Metallschutzschicht ist zwischen zwei Lagen oder Schichten aus Kunststoff innerhalb der funktionellen Schicht angeordnet.

In wieder anderer Ausführungsform ist eine erste Metallschutzschicht auf einer Aussenseite der funktionellen Schicht und eine zweite Metallschutzschicht zwischen zwei Lagen oder Schichten aus Kunststoff innerhalb der funktionellen Schicht angeordnet. Die funktionelle Schicht ist über die aussen liegende erste Metallschutzschicht - fallweise über einen Klebstoff oder Haftvermittler - mit der Metallfolie verbunden.

In zusätzlicher Ausführungsform kann eine erste Metallschutzschicht auf der Metallfolie angeordnet sein, eine zweite Metallschutzschicht kann auf der funktionellen Schicht angeordnet sein, wobei in der Kunststoffverbundfolie die Metallschutzschichten - fallweise über einen Klebstoff oder Haftvermittler - einander anliegen und eine dritte Metallschutrschicht ist zwischen zwei Lagen oder Schichten aus Kunststoff in der funktionellen Schicht angeordnet.

Jede der genannten Metallschutzschichten ist durch ein physikalisches Abscheideverfahren aufgebracht. Beispiele von physikalischen Abscheideverfahren sind Vakuum-Bedampfungsverfahren und Sputtern.

Zur Beschichtung mit der Metallschutzschicht wird die Metallfolie oder eine Kunststofffolie oder ein Metall-Kunststofffolienverbund in einer Vakuumkammer im Vakuum, als Einzelblätter und besonders zweckmässig von einem Wickel, einer Rolle oder einem Coil abgewickelt, einer Atmosphäre aus im wesentlichen verdampften oder gesputtertem Metall ausgesetzt. Der metallhaltige Dampf schlägt sich in einer 0,1 bis 1000 nm dicken Schicht auf wenigstens einer Seite der Metallfolie nieder. Kontinuierlich kann die mit der Metallschutzschicht bedampfte Metallfolie wieder auf einen gegenüberliegenden Wickel, Rolle oder Coil aufgehaspelt werden. Die Metallschutzschicht kann beispielsweise aus Cu, Au, Ag, Ni, Pd, Pt, Ti, Zr, Hf, V, Cr, Mo, W, Zn, Cd, Hg, Si, Ge, Sn, Pb, Fe, Ru, Os, Mn, Tc, Re, Ga, In, TI, Bi oder aus Gemischen davon sein. Bevorzugt sind Cr, Ti und Zr, allein oder in einem Gemisch zweier oder allen drei der Metalle und vor allem bevorzugt ist Cr. Entsprechend der geforderten Metallschutzschicht werden die Ausgangsmaterialien aus Substanzen, enthaltend das oder die oder bestehend aus dem oder den vorstehend genannten Elementen, ausgewählt. Beispielsweise wird das Metall in einer Vakuumkammer vorgelegt und mittels Elektronenstrahlkanone die auf das Targetmaterial gerichtet ist, verdampft oder mittels einer Sputterkathode gesputtert. Das Targetmaterial ist beispielsweise eine Platte aus dem zu verdampfenden Metall. Soll eine Mischung von Metallen abgeschieden werden, so kann ein Gemisch der entsprechenden Metalle oder mehreren Metallplatten aus den entsprechenden Metallen verdampft oder gesputtert werden. Das verdampfte oder gesputterte Metall schlägt sich auf der Oberfläche der Metallfolie in der angegebenen Dicke nieder. Die Dicke der Metallabscheidung lässt sich u.a. über die Durchlaufgeschwindigkeit der Metallfolie und durch die Stärke des Elektronenstrahls, resp. die Leistung der Sputterkathode, steuern.

Als besonders zweckmässig erweist sich eine Plasma-Vorbehandlung mit beispielsweise Argon (Ar), Stickstoff (N₂), NH₃, NOₓ (Stickoxyde) und bevorzugt mittels Sauerstoffplasma, der Metallfolie oder der Kunststofffolien oder -schichten in der Vakuumanlage. Die Vorbehandlung kann direkt in der Vakuumanlage vor dem Beschichten erfolgen. Die Plasmavorbehandlung für zu besonders guter Schichthaftung der Metallfolie, der Metallschutzschicht und der Kunststofffolien oder -schichten untereinander. Bevorzugt wird die Metallschutzschicht mittels Elektronenstrahlverdampfung und mit Chrom als Targetmaterial erzeugt. Besonders bevorzugt wird eine Plasmavorbehandlung mittels Sauerstoffplasma und eine Verdampfung mittels Elektronenstrahlverdampfung mit Chrom als Targetmaterial.

Ein Beispiel eines Verfahrens zum Aufbringen der Metallschutzschicht bei der Herstellung einer erfindungsgemässen Kunststoffverbundfolie ist, dass das Aufbringen der Metallschutzschicht durch ein Chromabscheideverfahren ausgeführt wird. Die Basisfolie, verbunden mit der Aluminiumfolie, oder die funktionelle Schicht, kann in einer Vakuumkammer einer Plasmabehandlung in einem Sauerstoffplasma und danach einer durch Elektronenstrahlverdampfen erzeugten chromhaltigen Dampfwolke ausgesetzt werden, wobei sich das Chrom auf der freien Oberfläche der Folie oder Schicht niederschlägt. Das Chromabscheideverfahren kann derart ausgeführt werden, dass eine Kunststoff-Aluminium-Folie, z.B. aus orientiertem Polyethylen oder Polyester und einer Aluminiumfolie, in einer Vakuumkammer einer Plasmabehandlung in einem Sauerstoffplasma und danach einer chromhaltigen Dampfwolke ausgesetzt wird. Die Dampfwolke wird aus einem Chromgranulat, welches mit einer Elektronenstrahlkanone bei ca. 30 bis 40 kV mit einem Strahlstrom von beispielsweise 1,1 bis 1,5 A erhitzt und verdampft wird, erzeugt. Bei einer Durchlaufgeschwindigkeit der Kunststoff-Aluminium-Folie oder der funktionellen Schicht von beispielsweise 120 m/min kann eine Chromschicht in einer Dicke von rund 80 nm erzeugt werden.

Im Falle, dass die Metallfolie über eine Beschichtungswalze, die in der Vakuumkammer angeordnet ist, geführt wird, schlägt sich der Metalldampf auf nur der freien, nicht die Beschichtungswalze berührende, Seite der Metallfolie nieder. Wird die Metallfolie frei, im sog. "free-span", d.h. beidseitig dem verdampften Metall ausgesetzt, durch die Vakuumkammer geführt, werden beide Seiten der Metallfolie beschichtet. Um die Beschichtungsgeschwindigkeit hoch zu halten und den Energieeintrag und den Verbrauch an Targetmaterialien zu minimieren, wird zweckmässig nur eine Seite der Metallfolie beschichtet.

Es ist auch möglich, die bereits mit der Basisfolie beschichtete Metallfolie in der Vakuumkammer dem verdampften Metall auszusetzen und somit die Metallfolie auf der freien Seite mit der Metallschutzschicht zu belegen.

Somit betrifft vorliegende Erfindung auch ein Verfahren zur Herstellung einer Kunststoffverbundfolie zur Verwendung als Batterieummantelung. Gemäss dem erfindungsgemässen Verfahren kann auf wenigstens einer der beiden Oberflächen der Metallfolie eine Metallschutzschicht aufgebracht werden. In anderer Weise kann die Metallschutzschicht an der Oberfläche der funktionellen Schicht, die an der Kunststoffverbundfolie zur Metallfolie weist, angeordnet sein. Auch kann die Metallschutzschicht zwischen zwei Schichten oder Folien der funktionellen Schicht angeordnet sein. Es kann auch eine erste Metallschutzschicht auf der funktionellen Schicht - an der zur Metallfolie weisenden Oberfläche - und eine zweite Metallschutzschicht zwischen zwei Schichten oder Folien der funktionellen Schicht angeordnet sein. Das Aufbringen der Metallschutzschicht erfolgt durch ein physikalisches Abscheidungsverfahren in einer Dicke von 0,1 bis 1000 nm (Nanometer).

Bevorzugt wird auf wenigstens einer Oberflächen der Metallfolie die Metallschutzschicht durch ein Vakuum-Bedampfungsverfahren oder durch Sputtern abgeschieden.

Die Metallschutzschicht kann in einer Dicke von 2 bis 100 nm, vorzugsweise von 5 bis 50 nm, insbesondere 40 nm, abgeschieden werden.

Mit dem erfindungsgemässen Verfahren wird als Metallschutzschicht zweckmässig Zirkon oder Titan und vorzugsweise Chrom abgeschieden.

Die mit der Metallschutzschicht belegte Metallfolie, vorzugsweise mit einer Chromschicht belegte Aluminiumfolie, ist auf der einen Seite mit der Basisfolie, zweckmässig mittels einer Adhäsivschicht, wie eines Klebstoffes, eines Kaschierklebers, eines Siegellackes oder -folie und/oder eines Primers verbunden. Auf der anderen Seite der Metallfolie, befindet sich die aufgedampfte Metallschutzschicht und mit der Metallschutzschicht, ist die funktionelle Kunststoffschicht, fallweise über eine Adhäsivschicht, wie einen Klebstoff, einen Kaschierkleber, einen Siegellack oder - folie und/oder einen Primer verbunden.

Demnach sind besonders bevorzugte Kunststoffverbundfolien nach vorliegender Erfindung solche, deren Basisfolie aus Kunststoff eine 15 bis 25 µm dicke orientierte Polyamidschicht, eine 12 bis 23 µm dicke Polyethylenterephtalatschicht oder eine Schicht aus zwei Lagen aus orientiertem Polyamid in einer Dicke von jeweils 15 bis 25 µm ist, die Metallfolie aus Aluminium in einer Dicke von 45 bis 60 µm ist, die Metallschutzschicht aus Chrom ist und eine Dicke von ca. 40 nm aufweist und die funktionelle Kunststoffschicht aus einer Schicht aus 15 µm orientiertem Polyamid und 30 bis 50 µm coextrudiertem Polypropylen oder aus einer Schicht aus 12 µm Polyethylenterephtalat und 50 µm coextrudiertem Polypropylen oder aus einer Schicht aus 15 µm orientiertem Polyamid und 30 µm coextrudiertem Polyethylen oder aus einer Schicht aus 20 µm orientiertem Polypropylen und 30 bis 50 µm coextrudiertem Polypropylen ist.

Die erfindungsgemässe Kunststoffverbundfolie wird als Batterieummantelung für Batteriemodule von Batterien und Akkumulatoren, wie Primär- und Sekundärbatterien, vorzugsweise Lithium-lonen-Polymer Batterien und Lithium-Polymer-Batterien, verwendet,

Beispielsweise kann die Kunststoffverbundfolie zu einer Tasche geformt, das Batteriemodul in die Tasche eingelegt und die Tasche an ihrem offenen Ende versiegelt, verschweisst oder verklebt werden. Das Batteriemodule kann auch ein einen entsprechenden Zuschnitt der Kunststoffverbundfolie eingeschlagen, eingewickelt oder eingerollt und die Kanten der Kunststoffverbundfolie können gegenseitig versiegelt, verschweisst oder verklebt werden.

In wieder anderer Weise kann aus der Kunststoffverbundfolie, beispielsweise durch heiss- und bevorzugt durch kaltverformen, ein Formkörper hergestellt werden. Das Verformen kann durch Tiefziehen, Streckziehen oder durch eine Kombination beider Verfahren erfolgen. Solche Formkörper können Schalen, Halbschalen oder etuiförmige Behälter sein. Das Batteriemodule wird in die Schale eingelegt und die Schale kann mit einer Deckfolie verschlossen werden. Die Deckfolie ist insbesondere ein passender Abschnitt der erfindungsgemässen Kunststoffverbundfolie. Das Verschliessen kann durch Siegelnähte entlang des Schalenrandes erfolgen. Es kann auch das Batteriemodul in eine untere Halbschale eingelegt und die untere Halbschale mit einer oberen Halbschale überdeckt werden. Die beiden Halbschalen werden entlang ihrer sich berührender Ränder gesiegelt und damit trennfest verbunden. Es ist auch möglich, das Batteriemodul in einen etwa etuiförmigen Behälter einzuführen und die Einführöffnung durch verformen des Behälters oder durch überdecken der Öffnung mit einem Deckel oder einer Kunststoffverbundfolie zu verschliessen. In allen Fällen müssen die aus dem Batteriemodul führenden Elektroden durch die Batterieumhüllungen geführt werden. Zweckmässig werden die Elektroden durch die jeweilige Einfüllöffnung für das Batteriemodul geführt. Die Elektroden können durch die Einfüllöffnung der Tasche, zwischen Schale und Bedeckelung, durch die Naht zwischen den beiden Halbschalen oder durch die Naht zwischen Behälter und Deckel geführt werden. Die Siegelnähte an den Taschen, Schalen, Halbschalen und Behältern sind vorteilhaft zumindest flüssigkeitsdicht, vorzugsweise luft- oder gasdicht, und trennfest. Die Ausleitung der Elektroden soll ebenfalls dicht verschlossen werden, so dass entlang der Elektroden keine Stoffe aus- oder eintreten können. Wahlweise kann statt einer Versiegelung auch eine Verschweissung oder eine Verklebung angewendet werden.

Bevorzugt sind Batterieummantelungen unter Verwendung einer kaltverformten Kunststoffverbundfolie. Bevorzugt werden die Kunststoffverbundfolien zu Schalen kaltverformt. Unter "kaltverformt" wird eine Formgebung, beispielhaft durch Tiefen, wie Tief- oder Streckziehen, bei Raumtemperatur, etwa 20°C bis 30°C. und fallweise bis zu Temperaturen von etwa 50°C 70°C, verstanden. Das Batteriemodul kann in die Schale eingelegt, die Elektroden über den Schalenrand geführt und die Schale dicht und trennfest mit einer Deckelfolie, aus zweckmässig der erfindungsgemässen Kunststoffverbundfolie versiegelt werden oder die Schale kann mittels einem aufgesiegelten Deckelformteil, aus zweckmässig einem getieften Formteil aus der erfindungsgemässen Kunststoffverbundfolie, dicht und trennfest verschlossen werden.

Figuren 1 bis 5 erläutern vorliegende Erfindung beispielhaft näher.

Figuren 1 bis 4 zeigen schematisch die Schichtfolge von erfindungsgemässen Kunststoffverbundfolien.

Figur 5 stellt einen Schnitt durch eine Batterie unter Verwendung einer erfindungsgemässen Batterieummantelung dar.

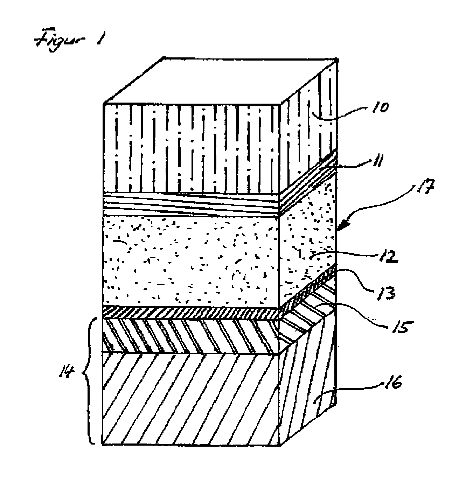

Gemäss Figur 1 weist ein Beispiel der Kunststoffverbundfolie (17) einen Schichtaufbau aus Basisfolie (10), Adhäsivschicht (11), Metallfolie (12), Metallschutzschicht (13) und der funktionellen Schicht (14), beispielhaft aus einer Lage eines denaturierten Polyolefins (15) und einer Polyolefinschicht (16) auf. Die Basisfolie (10) stellt insbesondere die an einer Batterieummantelung nach aussen weisende Schicht dar und kann aus orientiertem Polyamid sein. Die Metallfolie (12), wie eine Aluminiumfolie, ist auf der nach innen, zum Batteriemodul, weisenden Seite, mit der 0,1 bis 1000 nm dicken, mittels eines physikalischen Abscheidungsverfahrens aufgebrachten, Metallschutzschicht (13), z.B. einer Chromschicht, beschichtet. Die Metallschutzschicht (13) stellt einen hervorragenden Schutz, insbesondere Korrosionsschutz, für die darunter liegende Metallfolie (12) dar. Für die Metallfolie (12) schädliche, z.B. korrosive, aus dem Batteriemodul austretende Stoffe vermögen fallweise die funktionelle Schicht (14) zu durchdringen, werden jedoch durch die aufgedampfte schützende Metallschutzschicht (13) zuverlässig zurückgehalten und dringen nicht bis zur Metallfolie (12) vor. Somit können solche aggressiven Stoffe ihre für die Metallfolie (12) zerstörerische und insbesondere korrosive Wirkung an der Metallfolie (12) nicht entfalten. Die Metallfolie (12) stellt eine Barriereschicht gegen den Durchtritt von Feuchtigkeit und Gasen dar. Durch Korrosion und Lochfrass wird die Barrierewirkung beeinträchtigt oder zerstört. Ohne Barrierewirkung können nicht nur Stoffe aus dem Batteriemodul nach aussen treten, es können auch Stoffe, wie Feuchtigkeit, von aussen in das Batteriemodul eindringen. Eine Beeinträchtigung der Metallfolie (12) führt auch zur Delamination der Kunststoffverbundfolie. Eine Delamination ist zu vermeiden, da eine sich in ihre Schichten auflösende Batterieummantelung der zugedachten Wirkung nicht mehr gerecht zu werden vermag.

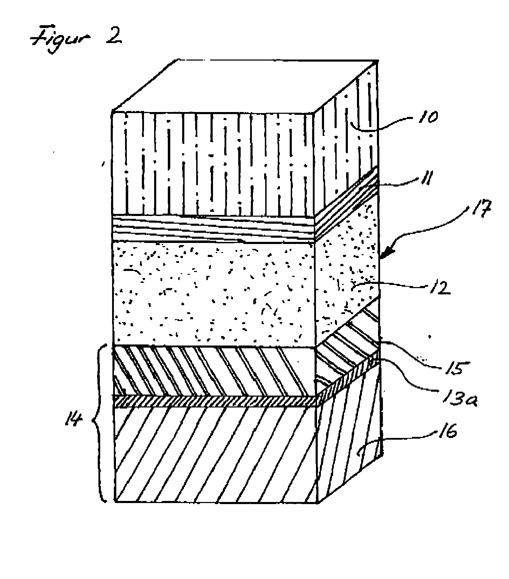

Figur 2 zeigt ein Beispiel der Kunststoffverbundfolie (17) mit dem Schichtaufbau aus Basisfolie (10), Adhäsivschicht (11). Metallfolie (12) und funktioneller Schicht (14). Die funktionelle Schicht 1 (4) ist aus den Schichten oder Lagen aus Kunststoff (15, 16) aufgebaut, Zwischen den Schichten (15, 16) ist die beispielhaft in 40 nm Dicke, mittels eines physikalischen Abscheidungsverfahrens aufgebracht, die Metallschutzschicht (13a), z.B. eine Chromschicht, angeordnet. Die Metallschutzschicht (13a) kann entweder auf die Kunststoffschicht (15) oder die Kunststoffschicht (16) oder fallweise beide Kunststoffschichten (15, 16) aufgedampft werden. Nach dem Aufdampfen werden die beiden Kunststoffschichten (15, 16) derart gefügt, dass die Metallschutzschicht (10a) zwischen die beiden Kunststoffschichten (15, 16) zu liegen kommt.

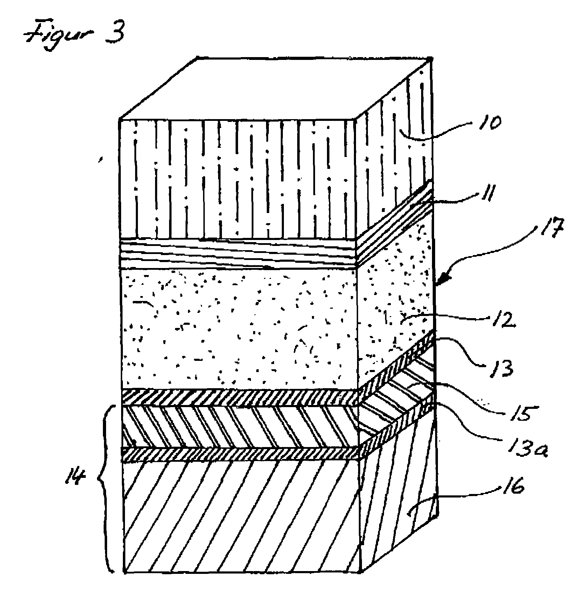

Figur 3 zeigt ein Beispiel der Kunststoffverbundfolie (17) mit dem Schichtaufbau aus Basisfolie (10), Adhäsivschicht (11), Metallfolie (12), Metallschutzschicht (13) und funktioneller Schicht (14). Die funktionelle Schicht 1 (4) ist aus den Schichten oder Lagen aus Kunststoff (15, 16) aufgebaut. Zwischen den Schichten (15, 16) ist eine zweite Metallschutzschicht (13a) angeordnet. Die Metallschutzschicht (13a) kann entweder auf die Kunststoffschicht (15) oder die Kunststoffschicht (16) oder fallweise beide Kunststoffschichten (15, 16) aufgedampft werden. Nach dem Aufdampfen werden die beiden Kunststoffschichten (15, 16) derart gefügt, dass die Metallschutzschicht (13a) zwischen die beiden Kunststoffschichten (15, 16) zu liegen kommt.

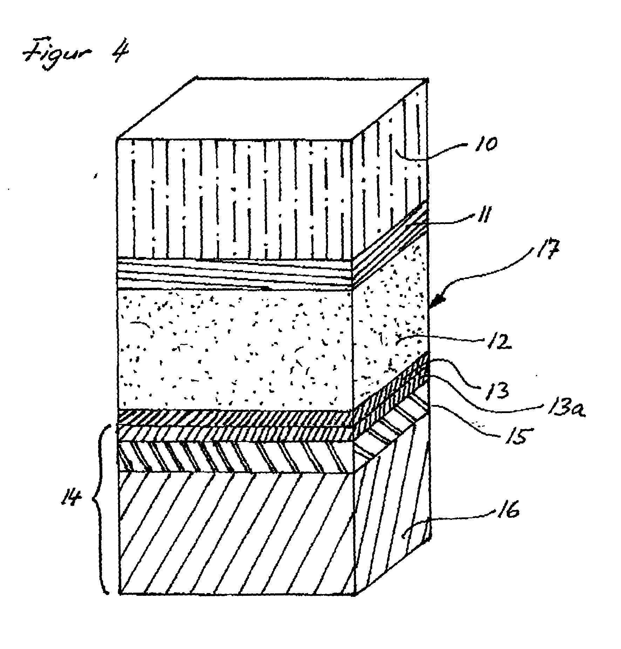

Figur 4 zeigt ein Beispiel der Kunststoffverbundfolie (17) mit dem Schichtaufbau aus Basisfolie (10), Adhäsivschicht (11), Metallfolie (12), Metallschutzschicht (13) und funktioneller Schicht (14). Die funktionelle Schicht 1(4) ist aus den Schichten oder Lagen aus Kunststoff (15, 16) aufgebaut. Auf der Schicht (15) ist eine zweite Metallschutzschicht (13a) angeordnet. Die zweite Metallschutzschicht (13a) ist auf die Kunststoffschicht (15) aufgedampft. Fallweise kann zwischen den beiden Metallschutzschichten (13, 13a) eine Adhäsivschicht oder ein Klebstoff (nicht abgebildet) vorgesehen sein. Der Vollständigkeit halber sei auf eine weitere mögliche Variante des Schichtaufbaues gemäss Figur 4 hingewiesen. Eine dritte Metallschutzschicht kann zwischen den Schichten oder Lagen aus Kunststoff (15, 16) vorgesehen sein.

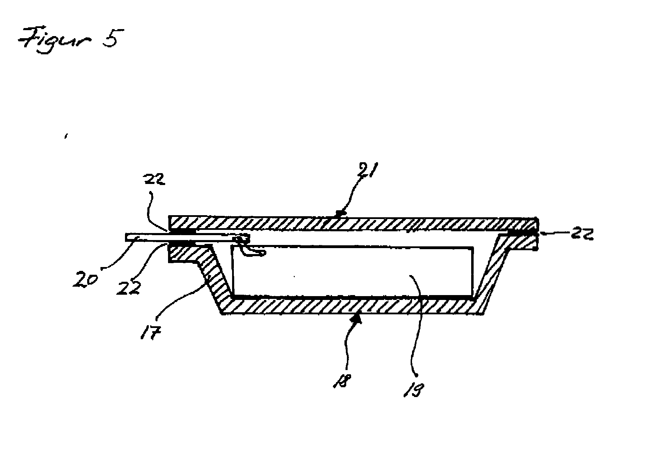

Figur 5 stellt einen Schnitt durch eine Batterie dar. In eine aus der erfindungsgemässen Kunststoffverbundfolie (17) durch Kaltverformen hergestellte Schale (18), z.B. rechteckiger Grundfläche, ist ein Batteriemodul (19) eingelegt. Die Elektroden (20) ragen aus dem Batteriemodul und queren den Rand der Schale (18). An den die Schale (18) überragenden Teilen der Elektroden kann beim Gebrauch der Batterie die Energie abgegriffen werden. Die Schale (18) ist mit einer Deckelfolie (21) abgedeckt. Die Deckelfolie (21) kann beispielsweise aus der gleichen Kunststoffverbundfolie (17), wie die Schale (18) gefertigt sein. Zwischen der Schale (18) und der Deckelfolie (21) befindet sich entlang der umlaufenden Schulter (22) der Schale (18) eine endlose trennfeste Siegelnaht (22). Damit ist das Batteriemodul gas- und feuchtigkeitsdicht eingeschlossen und von Ausseneinflüssen geschützt.

### Beispiele:

In nachfolgender Tabelle sind Beispiele von erfindungsgemässen Kunststoffverbundfolien gelistet.

| Basisfolie, nach aussen weisend | | Metallfolie | Metallschutzschicht | Funktionelle Schicht, nach innen weisend | |
|---|---|---|---|---|---|
| Fallweise eingesetzte weitere Schicht | | Al Dicke in µm | Metall, Dicke in nm | | Fallweise eingesetzte weitere Schicht |
| | 15 µm oPA | 40 µm | Cr, 40nm | 15 µm oPA | 30 µm PP-Coex |
| | 15 µm oPA | 45 µm | Cr, 40nm | 15 µm oPA | 30 µm PP-Coex |
| | 15 µm oPA | 60 µm | Cr, 40nm | 15 µm oPA | 30 µm PP-Coex |
| | 25 µm oPA | 45 µm | Cr, 40nm | 30µm PP Coex | |
| | 25 µm oPA | 60 µm | Cr, 40nm | 30µm PP Coex | |
| | 25 µm oPA | 60 µm | Cr, 40nm | 30µm PP Coex | |
| | 20 µm oPA | 45 µm | Cr, 40nm | 30µm PP Coex | |
| | 25 µm oPA | 100 µm | Cr, 40nm | 30µm PP Coex | |
| | 15 µm oPA | 45µm | Cr, 40nm | 15 µm oPA | 50µm PP-Coex |
| | 15 µm oPA | 60 µm | Cr, 40nm | 15 µm oPA | 50µm PP-Coex |
| | 15 µm oPA | 60 µm | Cr, 40nm | Cr, 40nm, 15 µm oPA | 50 µm PP-Coex |
| | 25 µm oPA | 45 µm | Cr, 40nm | 50µm PP Coex | |
| | 25 µm oPA | 60 µm | Cr, 40nm | 50µm PP Coex | |
| | 25 µm oPA | 60 µm | Cr, 40nm | 50µm PP Coex | |
| | 20 µm oPA | 45 µm | Cr, 40nm | 50µm PP Coex | |
| | 25 µm oPA | 100 µm | Cr, 40nm | 50µm PP Coex | |
| | 12 µm PET | 45 µm | Cr, 40nm | 12 µm PET | 50µm PP Coex |
| | 12 µm PET | 60 µm | Cr, 40nm | 12 µm PET | 50µm PP Coex |
| | 23 µm PET | 45 µm | Cr, 40nm | 50µm PP Coex | |
| | 23 µm PET | 60 µm | Cr, 40nm | 50µm PP Coex | |
| | 23 µm PET | 60 µm | Cr, 40nm | 50µm PP Coex | |
| | 12 µm PET | 45 µm | Cr, 40nm | 50µm PP Coex | |
| | 23 µm PET | 100 µm | Cr, 40nm | 50µm PP Coex | |
| | 25 µm oPA | 45 µm | Cr, 40nm | 12 µm PAN | 50µm PP Coex |
| | 25 µm oPA | 45 µm | Cr, 40nm | 12 µm PET | 50µm PP Coex |
| | 25 µm oPA | 60 µm | Cr, 40nm | 12 µm PET | 50µm PP Coex |
| | 23 µm PET | 45 µm | Cr, 40nm | 30µm PP Coex | |
| | 23 µm PET | 60 µm | Cr, 40nm | 30µm PP Coex | |
| | 23 µm PET | 60 µm | Cr, 40nm | 30µm PP Coex | |
| | 12 µm PET | 45 µm | Cr, 40nm | 30µm PP Coex | |
| | 23 µm PET | 100 µm | Cr, 40nm | 30µm PP Coex | |
| | 15 µm oPA | 45 µm | Cr, 40nm | 15 µm CoC | 30 µm PE-Coex |
| | 15 µm oPA | 45 µm | Cr, 40nm | 15 µm oPA | 30 µm PE-Coex |
| | 15 µm oPA | 60 µm | Cr, 40nm | 15 µm oPA | 30 µm PE-Coex |
| | 25 µm oPA | 45 µm | Cr, 40nm | 30µm PE Coex | |
| | 25 µm oPA | 60 µm | Cr, 40nm | 30µm PE Coex | |
| | 25 µm oPA | 60 µm | Cr, 40nm | 30µm PE Coex | |
| | 20 µm oPA | 45 µm | Cr, 40nm | 30µm PE Coex | |
| | 25 µm oPA | 100 µm | Cr, 40nm | 30µm PE Coex | |
| 25 µm oPA | 25 µm oPA | 45 µm | Cr, 40nm | 30µm PP Coex | |
| 25 µm oPA | 25 µm oPA | 100 µm | Cr, 40nm | 30µm PE Coex | |
| 20 µm oPA | 20 µm oPA | 45 µm | Cr, 40nm | 30µm PP Coex | |
| 20 µm oPA | 20 µm oPA | 100 µm | Cr, 40nm | 30µm PE Coex | |
| 15 µm oPA | 15 µm oPA | 45 µm | Cr, 40nm | 30µm PP Coex | |
| 15 µm oPA | 15 µm oPA | 100 µm | Cr, 40nm | 30µm PE Coex | |
| | 20 µm oPP | 100 µm | Cr, 40nm | 30µm PE Coex | |
| | 25 µm oPA | 40 µm | Cr, 40nm | 20µm oPP | 50µm PP Coex |
| | 25 µm oPA | 45 µm | Cr, 40nm | 20µm oPP | 50µm PP Coex |
| | 25 µm oPA | 45 µm | Cr, 40nm | 20µm oPP | 30µm PP Coex |
| | 15 µm oPA | 45 µm | Cr, 40nm | 20µm oPP | 50µm PP Coex |
| | 15 µm oPA | 45 µm | Cr. 40nm | 20µm oPP | 30µm PP Coex |

Wahlweise können in den Beispielen der Tabelle statt einer PP Coex- oder PE Coex-Beschichtung eine kaschierte oder heisskalandrierte PP- oder PE-Folie angewendet werden.

### In der Tabelle bedeuten:

Die Zahlen zu den Kunststofffolien oder -schichten bedeuten die Dicke in µm.
- oPA:: orientiertes Polyamid
- PET:: Polyethylenterephtalat
- oPP:: orientiertes Polypropylen
- Al:: Aluminium
- Cr:: Chrom
- nm:: Nanometer
- PP:: Polypropylen
- PE:: Polyethlen
- PAN:: Polyacrylnitril
- CoC:: Cycloolefinisches Copolymer
- Coex:: Coextrudiert

## Patentansprüche

1. Kunststoffverbundfolie enthaltend, übereinander liegend angeordnet, die Schichten
a) eine Basisfolie aus Kunststoff
b) eine Metallfolie und
c) eine funktionelle Kunststoffschicht
**dadurch gekennzeichnet, dass**
auf der Schicht b), der Metallfolie, zumindest gegen die Schicht c) gerichtet, und/oder auf der Schicht c), der funktionellen Kunststoffschicht, gegen die Schicht b), die Metallfolie, gerichtet, und/oder in der funktionellen Kunststoffschicht, wenigstens eine durch ein physikalisches Abscheidungsverfahren aufgebrachte Metallschutzschicht in einer Dicke von 0,1 bis 1000 nm (Nanometer) angeordnet ist.

2. Kunststoffverbundfolie nach Anspruch 1, **dadurch gekennzeichnet, dass** die Metallschutzschicht eine Dicke von 2 bis 100 nm vorzugsweise von 5 bis 50 nm, insbesondere 40 nm aufweist.

3. Kunststoffverbundfolie nach Ansprüchen 1 und 2, **dadurch gekennzeichnet, dass** die Metallschutzschicht durch ein Vakuum-Bedampfungsverfahren oder durch Sputtern erzeugte Metallschutzschicht ist.

4. Kunststoffverbundfolie nach Ansprüchen 1 bis 3, **dadurch gekennzeichnet, dass** die Metallschutzschicht eine Chrom-, eine Titan- oder eine Zirkonschicht, bevorzugt eine Chromschicht ist.

5. Kunststoffverbundfolie nach Ansprüchen 1 bis 4, **dadurch gekennzeichnet, dass** die Basisfolie aus Kunststoff eine 15 bis 25 µm dicke orientierte Polyamidschicht, eine 12 bis 23 µm dicke Polyethylenterephtalatschicht oder eine Schicht aus zwei Lagen aus orientiertem Polyamid in einer Dicke von jeweils 15 bis 25 µm ist, die Metallfolie aus Aluminium in einer Dicke von 45 bis 60 µm ist, die Metallschutzschicht aus Chrom ist und eine Dicke von 40 nm aufweist und die funktionelle Kunststoffschicht aus einer Schicht aus 15 µm orientiertem Polyamid und 30 bis 50 µm coextrudiertem Polypropylen oder aus einer Schicht aus 12 µm Polyethylenterephtalat und 50 µm coextrudiertem Polypropylen oder aus einer Schicht aus 15 µm orientiertem Polyamid und 30 µm coextrudiertem Polyethylen oder aus einer Schicht aus 20 µm orientiertem Polypropylen und 30 bis 50 µm coextrudiertem Polypropylen ist.

6. Batterieummantelung für Batteriemodule, vorzugsweise Lithium-lonen-Polymer-Batterien und Lithium-Polymer-Batterien, unter Verwendung einer Kunststoffverbundfolie nach Anspruch 1.

7. Batterieummantelung nach Anspruch 6 unter Verwendung einer kaltverformten Kunststoffverbundfolie.

8. Verfahren zur Herstellung einer Kunststoffverbundfolie nach Anspruch 1, **dadurch gekennzeichnet, dass** auf wenigstens einer Oberflächen der Schicht b), der Metallfolie, zumindest gegen die Schicht c) gerichtet, und/oder auf der Schicht c), der funktionellen Kunststoffschicht, gegen die Schicht b), die Metallfolie, gerichtet, und/oder in der funktionellen Kunststoffschicht, wenigstens eine Metallschutzschicht in einer Dicke von 0,1 bis 1000 nm (Nanometer) durch ein physikalisches Abscheidungsverfahren aufgebracht wird.

9. Verfahren zur Herstellung einer nach Anspruch 8, **dadurch gekennzeichnet, dass** auf wenigstens einer Oberflächen der Metallfolie die Metallschutzschicht durch ein Vakuum-Bedampfungsverfahren oder durch Sputtem abgeschieden wird.

10. Verfahren zur Herstellung einer Kunststoffverbundfolie nach Ansprüchen 8 und 9, **dadurch gekennzeichnet, dass** die Metallschutzschicht in einer Dicke von 2 bis 100 nm, vorzugsweise von 5 bis 50 nm und insbesondere 40 nm abgeschieden wird.

11. Verfahren zur Herstellung einer Kunststoffverbundfolie nach Ansprüchen 8 bis 10, **dadurch gekennzeichnet, dass** als Metallschutzschicht Zirkon oder Titan und vorzugsweise Chrom abgeschieden wird.

12. Verfahren zur Herstellung einer Kunststoffverbundfolie nach Ansprüchen 8 bis 11, **dadurch gekennzeichnet, dass** das Aufbringen der Metallschutzschicht durch ein Chromabscheideverfahren ausgeführt wird, wobei die Basisfolie a) verbunden mit der Metallfolie b) oder die funktionelle Schicht c) in einer Vakuumkammer einer Plasmabehandlung in einem Sauerstoffplasma und danach einer durch Elektronenstrahlverdampfen erzeugten chromhaltigen Dampfwolke ausgesetzt wird und sich eine Chromschicht auf der Folie oder Schicht niederschlägt.
